# EUROPÄISCHE PATENTANMELDUNG

(11) **EP 0 893 771 A2**
(43) Veröffentlichungstag der Anmeldung: **27.01.1999**
(21) Anmeldenummer: 98111400.2
(22) Anmeldetag: 20.06.1998
(51) Int. Cl.: G06F 17/30

(54) **Verfahren zum ortstransparenten Austausch von Prozessdaten**

(30) Priorität: 25.07.1997 DE 19732011
(71) Anmelder: ABB PATENT GmbH, 68309 Mannheim (DE)
(72) Erfinder: Berger, Wolfgang, Dipl.-Ing., 67376 Harthausen (DE); Wietzke, Stefan, Dipl.-Ing., 44793 Bochum (DE)
(74) Vertreter: Rupprecht, Klaus, Dipl.-Ing.

(57) **Zusammenfassung**

Das Verfahren bezieht sich auf den ortstransparenten Austausch von Prozeßdaten zwischen Anwendungsprogrammen (5) und Prozeßführungssystemen (4). Die Prozeßführungssysteme (4) und die Anwendungsprogramme (5) sind in mehrere unterschiedlichen Prozeßrechnersystemen (2.1 bis 2.7), die über ein Netzwerk (1) verbunden sind, vorhanden. Der Datenaustausch erfolgt unter Verwendung eines als Process Information Broker PIB bezeichneten Softwaresystems (3), das drei Komponentenarten aufweist, nämlich PIB-Server (3.1), PIB-Client (3.2) und PIB-Services (3.3). Die PIB-Services (3.3) enthalten einen Vermittlungsdienst (3.31) und einen Benutzerverwalter (3.32). Beim Hochfahren des Systems und zur Aktualisierung werden im jeweiligen Rechnersystem (2.1 bis 2.7) Prozeßdaten von prozeßrechnerspezifischen Datenstrukturen in prozeßrechnerunabhängige Datenstrukturen überführt, typisiert und als Datenablagen in einer Schnittstelle bereit gestellt. Alle Rechnersysteme (2.1 bis 2.7) melden die von ihnen bereitgestellten Prozeßdatentypen einschließlich deren Ablageort dem Vermittlungsdienst (3.31). Ein Zugriff der Anwendungsprogramme (5) auf Prozeßdatenablagen erfolgt unter Einschaltung des Vermittlungsdienstes (3.31), um das Angebot von Prozeßdatentypen und deren Ablageort zu erfragen. Auf dieser Basis werden Prozeßdatentypen abgerufen und Operationen ausgeführt.

## Beschreibung

Die Erfindung bezieht sich auf ein Verfahren zum ortstransparenten Austausch von Prozeßdaten innerhalb einer oder mehrerer technischen Anlagen.

Innerhalb einer technischen Anlage, wie beispielsweise eines Kraftwerks oder den Anlagen eines Energieversorgungsunternehmens ist oftmals im Zuge der Integration von Anlagenteilen unterschiedlicher Hersteller sowie der fortschreitenden Integration von Teilen des Geschäftsprozesses auch eine Integration unterschiedlicher Rechnersysteme notwendig.

In Kraftwerken sind beispielsweise folgende Rechnersysteme vorhanden:
- Prozeßrechner in Automatisierungsanlagen,
- Vorortrechner in Automatisierungsanlagen,
- Rechner mit Anwendungsprogrammen zur Prozeßoptimierung und Betriebsführung,
- komplette Betriebsführungssysteme, und
- Buchhaltungs- und Abrechnungssysteme.

Solche Rechnersysteme bilden bisher Insellösungen. Der Datenaustausch zwischen ihnen erfolgt teilweise manuell oder durch einzelne speziell entwickelte Verbindungen. Es wurden und werden teilweise immer noch Punkt zu Punkt Verbindungen implementiert. Die Erstellung, Wartung und Pflege solcher Systeme ist kostenaufwendig und fehleranfällig. Nachteile bestehen auch bezüglich weiterer Aspekte, wie z.B. Sicherheit, Erweiterbarkeit und Aufwärtskompatibilität.

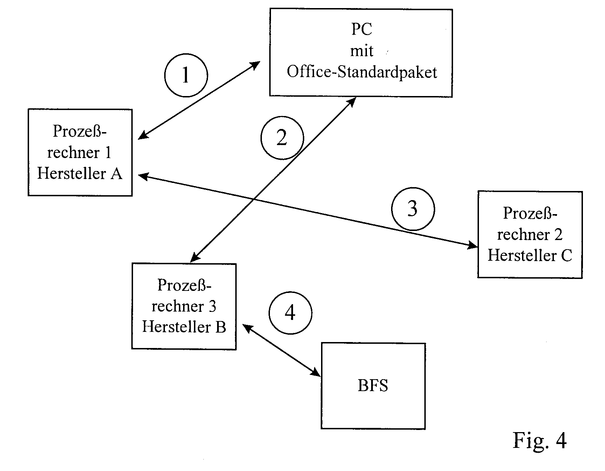

Figur 4 zeigt eine typische Situation bei der Integration von Rechnern und Softwarepaketen in einem Kraftwerk. Es sind beispielhaft vier Verbindungen 1 bis 4 dargestellt, wobei jede dieser Verbindungen durch einen eigenen Mechanismus realisiert ist.

Die Verbindung 1 zwischen einem Prozeßrechner 1 eines Herstellers A und Office Standard Paketen auf einem PC arbeitet mit SQL-Schnittstellen mit direktem Zugriff auf Datenbanktabellen. Nachteilig ist dabei, daß die Struktur der Datenbank offengelegt werden muß, nur relationale Datenbanken und die in ihnen abgelegten Inhalte abgefragt werden können und keine Ereignissteuerung möglich ist.

Die Verbindung 2 zwischen einem Prozeßrechner 3 eines Herstellers B und Office Standard Paketen auf einem PC arbeitet mit Filetransfer über speziell geschriebene Programme unter Verwendung von generell verfügbaren Filetransfer-Programmen. Nachteilig sind dabei die langsame Arbeitsweise, fehlende Ereignisorientierung und daß ein eigener Parser erforderlich ist.

Verbindung 3 zwischen einem Prozeßrechner 1 eines Herstellers A und einem Prozeßrechner 2 eines Herstellers B arbeitet mit Kommunikation über den Umweg einer Prozeßleitanlage. Das bedeutet, daß ein Rechnersystem 1 oder 3 über verfügbare Geräte der Leitanlage Daten auf den Leitanlagenbus koppelt und ein anderes Rechnersystem sie wieder auskoppelt. Nachteilig ist, daß hierfür im allgemeinen Treiber bis auf die unterste Protokollebene zu schreiben sind, die Leitanlage durch den Datenverkehr belastet wird und austauschbare Datenvolumen klein sind.

Verbindung 4 zwischen einem Prozeßrechner 3 eines Herstellers B und einem Betriebsführungssystem arbeitet mit manuellem Datenaustausch durch 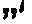 Abschreiben" der Daten und erneuter Eingabe in das Zielsystem. Eine Integration im eigentlichen Sinne ist dabei nicht gegeben.

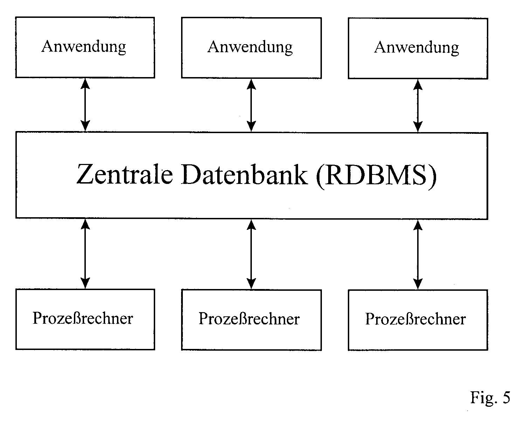

Ein bekannter, als Datenintegration bezeichneter Lösungsansatz zur Integration von Rechnersystemen mit einer Entkopplung von Prozeßrechnersystemen und Anwenderprogrammen und unter Vermeidung der vorgenannten Nachteile ist in Figur 5 dargestellt. Dabei ist eine zentrale Datenbank mit z.B. einem relationalen Datenbank-Management-System (RDBMS) vorgesehen. Der Prozeßdatenaustausch läuft in einem solchen Verfahren so ab, daß die Prozeßrechner ihre Prozeßdaten in der zentralen Datenhaltung ablegen und die Anwendungsprogramm davon zeitlich entkoppelt mittels quasi standardisierten Zugriffsmechanismen auf die Prozeßdaten zugreifen. Nachteile dieses Lösungsansatzes bestehen darin, daß die Daten so aufbereitet werden müssen, daß sie in relationalen Datenbanken ablegbar oder zumindest in solcher Form abrufbar sind. Das Problem der Datenkonsistenz ist schwierig zu handhaben. Ereignisorientierte Verarbeitung der Daten ist nicht möglich. Eine Anpassung an einen geänderten Geschäftsprozeß oder Arbeitsablauf ist aufwendig. Die innere Struktur der zu koppelnden Prozeßrechnersysteme muß bekannt sein und darf sich im allgemeinen nicht mehr ändern. Das Problem des Zugriffschutzes, vor allem beim Schreiben von Daten in die Prozeßrechnersysteme ist nicht befriedigend gelöst.

Der Erfindung liegt die Aufgabe zugrunde, ein Verfahren zum Austausch von Prozeßdaten mehrerer unterschiedlicher Prozeßrechner anzugeben, das - im Gegensatz zur Datenintegration - eine Anwendungsintegration ermöglicht.

Diese Aufgabe wird durch ein Verfahren zum ortstransparenten Austausch von Prozeßdaten mit den im Anspruch 1 angegebenen Merkmalen gelöst. Vorteilhafte Ausgestaltungen sind in weiteren Ansprüchen angegeben.

Vorteile des Verfahrens bestehen unter anderem darin, daß Datenabfragen und Datenvorgaben an beliebigen Prozeßrechnern möglich sind. Eine Entkopplung von Netzwerk, Prozeßrechnersystem und Anwendungsprogrammen ist gegeben. Alle gängigen Hard- und Softwareplattformen können unterstützt werden. Der Konfigurations- und Inbetriebnahmeaufwand ist minimal. Weitere Vorteile sind die Berücksichtigung von Redundanzkonzepten, ein modularer Aufbau, Erweiterbarkeit und generelle Aufwärtskompatibilität.

Eine weitere Beschreibung der Erfindung erfolgt anhand von Zeichnungsfiguren.

Es zeigen:
- Fig. 1: die Struktur eines Systems, das zur Durchführung des Verfahrens geeignet ist,
- Fig. 2: den Ablauf innerhalb einer Anlage während des Hochlaufs des Systems,
- Fig. 3: den Ablauf beim Zugriff auf Daten und der Durchführung von Operationen,
- Fig. 4: Rechnerverbindungen gemäß dem Stand der Technik und
- Fig. 5: ein System mit Datenintegration gemäß dem Stand der Technik.

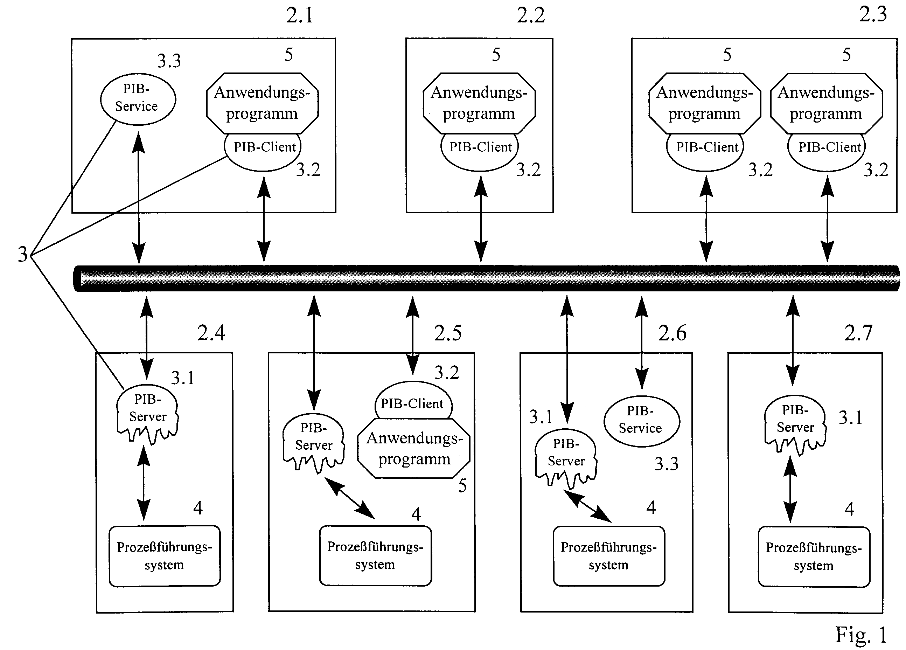

Figur 1 zeigt beispielhaft die Struktur eines Systems, das zur Durchführung des erfindungsgemäßen Verfahrens geeignet ist. In diesem System kommunizieren Rechner oder Rechnersysteme 2.1 bis 2.7 über ein Netzwerk 1. Die Rechner 2.1 bis 2.7 sind nachstehend auch als Knoten oder lokale Knoten bezeichnet.

Die Rechner 2.1 bis 2.7 können unterschiedlichen Ebenen eines Gesamtsystems, z.B. einer Prozeßebene, Prozeßleitebene oder Betriebsleitebene zugeordnet sein.

Ein Teil der Rechner, z.B. 2.4 bis 2.7 enthält Programme eines oder mehrerer Prozeßführungssysteme 4, ein anderer Teil der Rechner, z.B. 2.1 bis 2.3 und 2.5 enthält Anwendungsprogramme 5. Die Rechner 2. 1 bis 2.7 können sowohl Programme des Prozeßführungssystems 4, als auch Anwendungsprogramme 5 enthalten, wie z.B. anhand des Rechners 2.5 dargestellt ist.

Unter Anwendungsprogramme 5 sind Programme zur Durchführung unterschiedlicher Aufgaben im gesamten Geschäftsprozeß zu verstehen. Sie greifen zur Durchführung ihrer Aufgabe auf Prozeßdaten zu, die das Prozeßführungssystem 4 bereitstellt.

Das erfindungsgemäße Verfahren bezieht sich auf den Austausch von Prozeßdaten, also auf den Zugriff der Anwendungsprogramme auf Prozeßdaten, die in sehr unterschiedlichen Rechnersystemen zur Verfügung gestellt werden.

Zur Durchführung dieses Datenaustausches ist über die Rechner 2.1 bis 2.7 des in Figur 1 gezeigten Systems verteilt ein Softwaresystem 3 mit Komponenten 3.1 bis 3.3 implementiert, das hier auch als Process Information Broker PIB bezeichnet ist.

Das PIB-System 3 ist ein Softwaresystem mit drei Komponentenarten, nämlich einem PIB-Server 3.1, einem PIB-Client 3.2 und PIB-Services 3.3. Diese Komponenten können in einem System mehrfach vorhanden sein. Die PIB-Services 3.3 werden an sich nur einmal benötigt, können aber aus Redundanzgründen mehrfach vorhanden sein.

Die PIB-Server 3.1 und die PIB-Services 3.3 sind eigenständige Programme, also keine integralen Bestandteile von Prozeßführungssystemen 4. Damit wird eine konsequente Trennung der Prozeßführungssysteme 4 in einer Prozeßführungsebene von Anwendungsprogrammen 5 in darüberliegenden Ebenen erreicht.

Die Aufgaben und Funktionen der Komponenten 3.1 bis 3.3 werden nachstehend weiter erläutert.

Der PIB-Server 3.1 stellt die Prozeßdaten eines Prozeßrechners lokal oder über das Netzwerk 1 zur Verfügung, wobei die Prozeßdaten in einer orthogonalisierten Form zur Verfügung stehen, d.h. Formate und Inhalte der Prozeßdaten werden in eine vom Prozeßrechnersystem unabhängige Datenstruktur überführt. Um diese Prozeßdaten zu konsumieren, werden Schnittstellenfunktionen bereit gestellt, die verschiedene Operationen auf den Prozeßdaten ermöglichen. Der PIB-Server 3.1 enthält die gesamte Logik, die zur Beschaffung, Verwaltung und Bereitstellung der Prozeßdaten notwendig ist.

Die PIB-Services 3.3 stellen eine Reihe von Diensten zur Verfügung, die es den Anwendungsprogrammen 5 ermöglichen, auf die Prozeßdaten ortstransparent zuzugreifen, ohne etwas über die Struktur der einzelnen Prozeßrechnersysteme und den Ablageort der Prozeßdaten wissen zu müssen. Hierdurch lassen sich verschiedene Redundanzkonzepte auf einfache Weise verwirklichen. Des weiteren werden von den Services die Zugriffe kontrolliert und die Benutzer verwaltet. Um die sichere Servicebereitstellung zu gewährleisten, können die PIB-Services beliebig oft im System repliziert werden. Die PIB-Services 3.3 beinhalten einen hier als Trader bezeichneten Vermittlungsdienst 3.31, sowie einen Benutzerverwalter 3.32, deren Funktionen noch erläutert werden.

Ein PIB-Client 3.2 ist eine Art Treiber, der es einem beliebigen Anwendungsprogramm 4 ermöglicht, von den Prozeßrechnersystemen unabhängige Schnittstellenfunktionen zu nutzen. Die Schnittstellenfunktionen werden dabei von den PIB-Servern und den PIB-Services bedient. Anwendungsprogramme 4 können dadurch ortstransparent und kontrolliert auf die benötigten Prozeßdaten zugreifen, ohne etwas über die Struktur der Prozeßrechnersysteme wissen zu müssen.

Um das dynamische Verhalten des PIB-Systems zu erläutern, werden im folgenden zwei grundsätzliche Aspekte im einzelnen betrachtet, nämlich das Hochfahren eines Prozeßrechners und damit das dynamische zur Verfügung stellen der Daten, sowie der Ablauf einer gerichteten und ortstransparanten Operation auf Prozeßdaten durch einen Client 3.2.

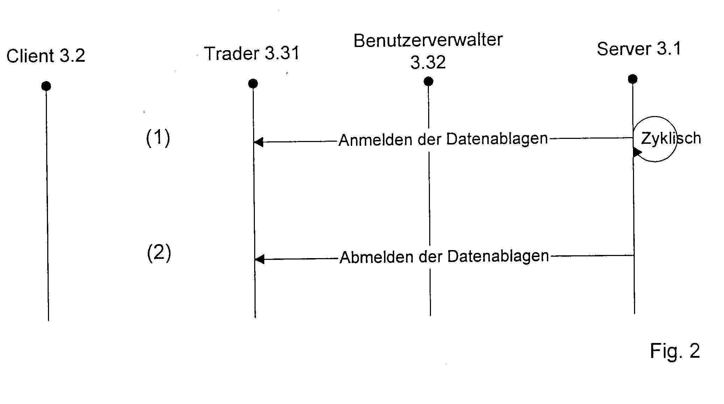

Figur 2 zeigt den Ablauf innerhalb einer Gesamtanlage während des Hochfahrens. Die senkrechten Linien stellen dabei die beteiligten Komponenten 3.1, 3.2, 3.31, 3.32 dar. Die Pfeile zwischen den Komponenten symbolisieren die gerichteten Aktionen zwischen diesen Komponenten.

Jeder PIB-Server 3.1 stellt nach dem Hochfahren fest, welche Prozeßdatenangebote 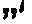 sein" lokaler Knoten oder Rechner, z.B. 2.4 zur Verfügung stellen kann. Hierbei handelt es sich nicht um einzelne analoge Meßwerte oder binäre Zustände (Signale), sondern um generelle Typen von Prozeßdaten, wie z.B. 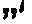 aktuelles Prozeßabbild".

Dem PIB-Server 3.1 werden als einziges Konfigurationsdatum diejenigen Knoten, in Figur 1 z.B. 2.1 und 2.6 bekannt gemacht, auf denen PIB-Services 3.3 vorhanden sind. Diese manuelle Konfiguration könnte mittels eines automatisierten Suchverfahrens eliminiert werden, was jedoch aus Effizienzgründen vor allem in sehr großen Netzen nicht sinnvoll sein dürfte.

Das nach dem Hochfahren ermittelte Prozeßdatenangebot wird von den PIB-Servern 3.1 direkt an alle Trader 3.1 gemeldet. Dieser Vorgang ist in Figur 2 mit (1) bezeichnet. Von den Tradern wird das Prozeßdatenangebot persistent gespeichert. Dies garantiert nach einem Ausfall eines Rechners, auf dem ein Trader läuft, daß die Prozeßdatenangebote nach dem Wiederanlauf sofort zur Verfügung stehen.

Die PIB-Server 3.1 überprüfen jeweils die Angebote ihres Rechners und aktualisieren, wenn notwendig, diese bei allen Vermittlungsdiensten 3.31 im Netzwerk. Diese Vorgänge sind mit (1) und (2) bezeichnet. Der Client 3.2 und der Benutzerverwalter 3.32 spielen beim Hochfahren keine Rolle.

Redundanzkonzepte sind über ein Namenskonzept der Prozeßdatenangebote realisiert. Wird der gleiche Name für ein Prozeßdatenangebot verwendet, so werden diese als redundant aufgefaßt. Angemeldet werden dürfen nur aktive Prozeßdatenangebote, im Redundanzfall also nur diejenigen, die im Hot-Standby-Betrieb betrieben werden. Es ist dabei unterstellt, daß eine stoßfreie Umschaltung vom Prozeßrechnersystem geleistet wird.

Um eine Operation auf Prozeßdaten ausführen zu können, muß sich ein Client 3.2 zuerst beim Benutzerverwalter 3.32 anmelden. Dieser überprüft die Zugangsberechtigung des Client und liefert einen als Session-Key bezeichneten Schlüssel an den Client zurück. Dieser Schlüssel wird bei jeder weiteren Operation mit übertragen und dient der Zugriffskontrolle.

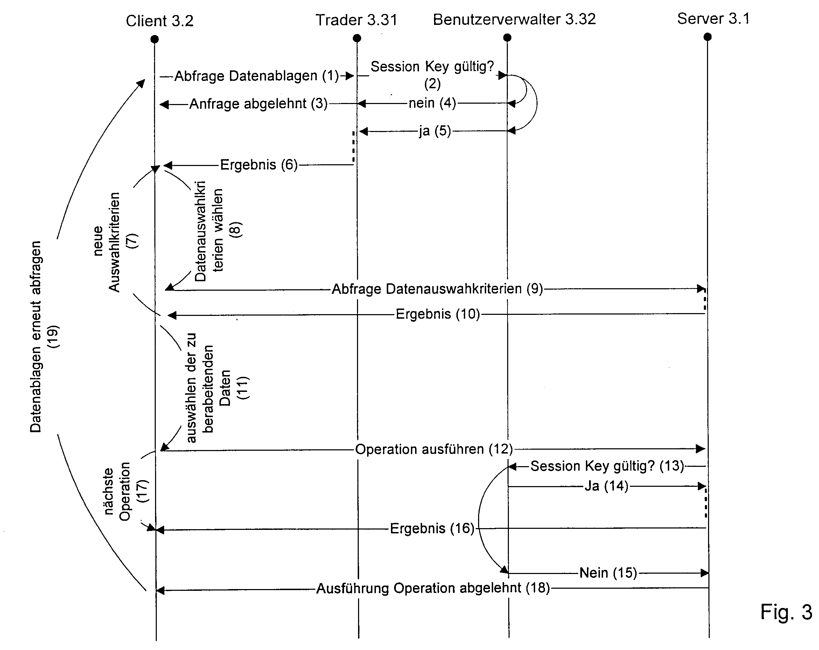

Figur 3 zeigt den Ablauf einer kompletten Operation aus einem 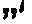 Nullzustand" heraus. Die senkrechten Linien stellen die Komponenten 3.1, 3.2, 3.31, 3.32 des Gesamtsystems dar. Die Pfeile zwischen ihnen symbolisieren die ausgeführten und gerichteten Operationen. Die gestrichelten, senkrechten Linien symbolisieren asynchrone Vorgänge. Alle anderen Operationen werden synchron ausgeführt.

Der dargestellte Ablauf ist wie folgt zu lesen, wobei die einzelnen Vorgänge durch in Klammern stehende Ziffern bezeichnet sind.

Ein Client fragt in einem ersten Vorgang (1) beim Trader/Vermittlungsdienst 3.31 die Liste der im Netzwerk aktuell zur Verfügung stehenden Datenablagen ab. Der Trader seinerseits läßt einen bei der Anfrage mitgelieferten Schlüssel durch den Benutzerverwalter überprüfen (2). Ist die Antwort des Benutzerverwalters positiv (5), so werden die Listen der Datenablagen mit ihren zugehörigen Adressen, also Name und Ablageort, an den Client 3.2 zurückgeliefert (6). Ist die Antwort des Busverwalters 3.32 negativ (4), wird der Auftrag als nicht ausführbar abgelehnt (3).

Aus Sicherheitsgründen können die vom Trader gelieferten Referenzen so codiert werden, daß eine durch ein anderes Programm abgerufene Adresse nicht für den Datenzugriff benutzbar ist.

Auf jeder der zurückgelieferten Datenablagen können Operationen ausgeführt werden (9), (12). Diese Operationen werden direkt mit dem zugehörigen Server abgewickelt, der über die vom Trader gelieferte Adresse ansprechbar ist.

Der erste Teil der Operationen liefert genauere Beschreibungen über die Daten der jeweiligen Datenablage, z.B. die Liste gespeicherter Signale, (9), (10). Hierbei erfolgt keine erneute Überprüfung der Zugangsberechtigung.

Mit Hilfe dieser Informationen ist es möglich, Operationen wie Lesen oder Schreiben von Daten auszuführen (12). Da Operationen, wie das Schreiben von Daten, z.B. Sollwertvorgaben, sicherheitsrelevant sind, wird bei jeder dieser Operationen erneut der Schlüssel geprüft (13). (14), (15). Diese Prüfung wird direkt in dem angesprochenen Server durchgeführt. Die Operationen werden nur bei gültigen Schlüsseln durchgeführt (14), (16). Anderenfalls wird die Ausführung der Operationen abgelehnt (15), (18).

Über diesen Mechanismus ist es möglich, Benutzerprofile einzuführen. Beispielsweise könnte ein Teil der Anwender berechtigt sein, nur Daten zu lesen, ein anderer Teil aber auch berechtigt sein, Daten zu schreiben. Durch die Verlagerung dieser Funktion in das Netzwerk ist eine zentrale und einheitliche Benutzerverwaltung und Zugangskontrolle möglich. Es versteht sich, daß alle Schritte des Zugriffs beliebig oft wiederholt werden können (7), (17), (19).

## Patentansprüche

1. Verfahren zum ortstransparenten Austausch von Prozeßdaten zwischen Anwendungsprogrammen (5) und Prozeßrechnersystemen (4) zur Weiterverarbeitung der Prozeßdaten innerhalb einer oder mehrerer technischer Anlagen, wobei die Prozeßführungssysteme (4) und die Anwendungsprogramme (5) in mehreren unterschiedlichen Prozeßrechnersystemen (2.1 bis 2.7), die über ein Netzwerk (1) verbunden sind, vorhanden sind, und wobei unter Verwendung eines Software-Systems (3, 3.1, 3.2, 3.3, 3.31, 3.32)
a) im jeweiligen Rechnersystem (2.1 bis 2.7) Prozeßdaten von prozeßrechnerspezifischen Datenstrukturen in prozeßrechnerunabhängige Datenstrukturen überführt, typisiert und als Datenablagen in einer Schnittstelle bereitgestellt werden,
b) außerdem im jeweiligen Rechnersystem (2.1 bis 2.7) Schnittstellenfunktionen bereitgestellt werden, die definierte Operationen auf den Datenablagen ermöglichen,
c) alle Rechnersysteme (2.1 bis 2.7) die von ihnen als Datenablagen bereitgestellten Prozeßdatentypen einschließlich deren Ablageort bei einem Vermittlungsdienst (3.31) anmelden und aktualisieren, und
d) ein Austausch von Prozeßdaten in Schritten erfolgt, in denen die Anwendungsprogramme
- beim Vermittlungsdienst (3.31) das Angebot von Prozeßdatentypen und deren Ablageort erfragen,
- einen oder mehrere Prozeßdatentypen auswählen, und
- auf ausgewählten Prozeßdatentypen, also auf den entsprechenden Datenablagen Operationen ausführen.

2. Verfahren nach Anspruch 1, dadurch gekennzeichnet, daß ein als PIB (Process Information Broker)-System (3) bezeichnetes Softwaresystem verwendet wird, das drei Arten von Komponenten (3.1, 3.2, 3.3) aufweist, wobei
a) ein PIB-Server (3.1) jeweils die Bereitstellung der Datenablagen und Schnittstellenfunktionen durchführt
b) PIB-Services (3.3) den Vermittlungsdienst (3.31) sowie wenigstens einen Benutzerverwalter (3.32) beinhalten, der Zugriffe auf Datenablagen kontrolliert, und
c) PIB-Clients (3.2) jeweils den Anwenderprogrammen (5) zugeordnet werden, wobei
c1) ein PIB-Client (3.2) zur Durchführung von Operationen, wie Schreiben oder Lesen von Daten sich zuerst beim Benutzerverwalter (3.32) anmeldet,
c2) der Benutzerverwalter die Zugangsberechtigung des PIB-Clients (3.2) prüft und einen Berechtigungsschlüssel zurücksendet, und
c3) der PIB-Client (3.2) unter Verwendung des Schlüssels die beabsichtigte Operation durchführt.

3. Verfahren nach Anspruch 2, dadurch gekennzeichnet, daß ein Softwaresystem (3) verwendet wird, in dem die PIB-Services (3.3) einschließlich des Benutzerverwalters (3.32) aus Redundanzgründen mehrfach vorhanden sind, wobei ein Benutzerverwalter (3.2) als zentraler Benutzerverwalter aktiv ist und die übrigen Benutzerverwalter einen Datenabgleich durchführen, um in einem Störungsfall die Funktion übernehmen zu können.
